# EUROPEAN PATENT APPLICATION

(11) **EP 4 717 327 A1**
(43) Date of publication of application: **01.04.2026**
(21) Application number: 25202958.2
(22) Date of filing: 18.09.2025
(51) Int. Cl.: A62C 3/16, A62C 35/02, A62C 99/00, H01M 50/383

(54) **PRESSURE DROP RESPONSIVE GAS TANK, GAS TANK OPENING DEVICE, AND BATTERY CONTAINER EQUIPPED WITH GAS TANK**

(30) Priority: 26.09.2024 KR 20240130955
(71) Applicant: SAMSUNG SDI CO., LTD., Yongin-si, Gyeonggi-do 17084 (KR)
(72) Inventor: LEE, Kwang Deuk, 17084 Yongin-si (KR)
(74) Representative: Marks & Clerk LLP

(57) **Abstract**

A pressure drop responsive gas tank includes: a tank main body inside a container, filled with a non-combustible gas, and having a discharge passage configured to discharge the non-combustible gas; and an opening device mounted on the discharge passage and configured to open the discharge passage when an internal pressure of the container is lower than an atmospheric pressure so that the non-combustible gas is discharged from the tank main body.

## Description

### BACKGROUND

### 1. Field

Aspects of embodiments of the present disclosure relate to a pressure drop responsive gas tank, a gas tank opening device, and a battery container provided with the gas tank.

### 2. Description of the Related Art

Different from primary batteries that are not designed to be charged, secondary batteries are designed to be discharged and recharged. Low-capacity secondary batteries are used in small portable electronic devices, such as smart phones, feature phones, notebook computers, digital cameras, and camcorders, while large-capacity secondary batteries are widely used as power sources for driving motors, such as of hybrid vehicles or electric vehicles, and for power storage. These batteries include an electrode assembly including (or composed of) positive and negative electrodes, a case in which the electrode assembly is accommodated, an electrode terminal connected to the electrode assembly, etc.

In addition, a plurality of batteries may be gathered together to form an energy storage device having increased voltage and/or current capacity. Energy storage devices may include battery modules/packs used in vehicles or electrical appliances.

An energy storage system (ESS) is a system for storing energy and allowing the stored energy to be used when needed. The ESS is usually a device in which electricity is stored. The ESS for electricity storage includes (or is composed of) a sealed container and a plurality of batteries disposed therein.

However, in the case of a fire inside the container, it is difficult to quickly extinguish the fire. To extinguish the fire, a door of the container needs to be opened because the fire causes the inside of the container to be in a negative pressure state due to oxygen exhaustion. When the door is opened in the negative pressure state, oxygen rapidly flows into the container, causing a backdraft phenomenon.

The above information disclosed in this Background section is for enhancement of understanding of the background of the present disclosure, and therefore, it may contain information that does not constitute a related (or prior) art.

### SUMMARY

According to embodiments of the present disclosure, in the case of a fire occurring inside a container, a drop in internal pressure of the container is prevented, thereby enabling faster and more efficient extinguishment of the fire.

Embodiments of the present disclosure prevent a drop in internal pressure of the container by automatically operating in the case of a fire inside a container accommodating a battery, thereby reducing or eliminating the risk of backdraft and enabling extinguishment of the fire at an early stage.

A pressure drop responsive gas tank, according to an embodiment of the present disclosure, includes:
a tank main body configured to be installed inside a container,
wherein the tank main body accommodates, e.g. is filled with, a non-combustible gas, and has a discharge passage through which the non-combustible gas is discharged; and
an opening device mounted on the discharge passage and configured to open the discharge passage when an internal pressure of the container (e.g. a pressure external to the tank main body) is lower than an atmospheric pressure so that the non-combustible gas is discharged from the tank main body.

The opening device may comprise: a fixed supporter on the discharge passage and forming a gas passage therethrough; and a rupture plate blocking the gas passage while mounted on the fixed supporter and configured to be deformed by an expansion pressure of the non-combustible gas when the internal pressure of the container lower than the atmospheric pressure so that the gas passage is opened.

The rupture plate may be a metal sheet.

The opening device may comprise: an inner cap having a cap body having a gas passage and mounted inside the discharge passage and a rupture plate fixed to the cap body and blocking the gas passage; and an outer cap fixing the inner cap while coupled to the tank main body and having a penetration path therethrough.

The outer cap may further comprise a rupture trigger member having a lower end portion positioned above the rupture plate and configured to rupture the rupture plate when the rupture plate swells upwardly.

The opening device may comprise: a valve mounted on the discharge passage of the tank main body and controlled to be opened and closed by a control signal transmitted from the outside; a pressure sensor configured to detect the internal pressure of the container; and a valve controller connected to the pressure sensor through a communication module and configured to drive the valve based on the detected pressure information.

The valve controller may be a wireless manager terminal of a container manager.

The valve controller may comprise a valve control unit installed outside the container and configured to control the valve.

A gas tank opening device, according to another embodiment of the present disclosure, is configured for mounting on a tank main body, wherein the tank main body accommodates a non-combustible gas, has a discharge passage for the non-combustible gas, and is configured to be installed inside a container. The gas tank opening device has a passage opening part configured to open the discharge passage when an internal pressure of the container (e.g. a pressure external to the tank main body) decreases, e.g. to a pressure lower than an atmospheric pressure, so that the non-combustible gas is discharged from the tank main body.

The passage opening part may further comprise: a rupture plate configured to be ruptured by an expansion pressure of the non-combustible gas inside the tank main body when the internal pressure of the container decreases to open the discharge passage; and a fixed supporter having a gas passage and supporting the rupture plate.

The gas tank opening device may further comprise: a rupture plate configured to be ruptured by an expansion pressure of the non-combustible gas inside the tank main body when the internal pressure of the container decreases to open the discharge passage; an inner cap coupled to the rupture plate, having a gas passage that is blocked by the rupture plate, and installed in the discharge passage; and an outer cap fixing the inner cap while coupled to the tank main body and having a penetration path therethrough.

The outer cap may further comprise a rupture trigger member having a lower end portion positioned above the rupture plate and configured to rupture the rupture plate when the rupture plate swells upwardly.

A battery container, according to another embodiment of the present disclosure, includes:
a container accommodating a battery and having a door at one side thereof;
a tank main body installed inside the container,
wherein the tank main body accommodates, e.g. is filled with, a non-combustible gas, has a discharge passage, and is configured to operate when a pressure inside the container (e.g. a pressure external to the tank main body) drops, e.g. due to a fire, to discharge the non-combustible gas from the tank main body into the container; and
an opening device mounted on the discharge passage and configured to open the discharge passage when an internal pressure of the container is lower than the atmospheric pressure so that the non-combustible gas is discharged from the tank main body into the container.

The opening device may comprise: a fixed supporter installed on the discharge passage and having a gas passage therethrough; and a rupture plate blocking the gas passage while mounted on the fixed supporter and configured to be deformed by an expansion pressure of the non-combustible gas when the internal pressure of the container is a negative pressure so that the gas passage is opened.

The opening device may comprise: an inner cap having a cap body having a gas passage and mounted inside the discharge passage and a rupture plate fixed to the cap body and blocking the gas passage therethrough; and an outer cap fixing the inner cap while coupled to the tank main body and having a penetration path therethrough.

The opening device may comprise: a valve mounted on the discharge passage of the tank main body and controlled to be opened and closed by a control signal transmitted from the outside; a pressure sensor configured to detect the internal pressure of the container; and a valve controller connected to the pressure sensor through a communication module and configured to drive the valve based on the detected pressure information.

The valve controller may be a wireless manager terminal of a container manager.

The valve controller may have a valve control unit outside the container and configured to control the valve.

The valve may be connected to a guide pipe for guiding the non-combustible gas discharged through the valve, the guide pipe extending in a longitudinal direction and having a plurality of discharge holes formed therein.

A fixed duct for receiving and guiding the non-combustible gas discharged through the valve and having a plurality of discharge holes may be mounted on an inner surface of the container.

Aspects and features of the present disclosure are not limited to those described above, and other aspects and features not specifically mentioned herein will be clearly understood by those skilled in the art from the description of the present disclosure below.

At least some of the above and other features of the invention are set out in the claims.

### BRIEF DESCRIPTION OF THE DRAWINGS

The above and other aspects and features of the present disclosure will become more apparent to those of ordinary skill in the art by describing embodiments thereof, in detail, with reference to the accompanying drawings, in which:
FIG. 1 schematically shows a pouch-type battery;
FIG. 2 is a cross-sectional view of a cylindrical battery;
FIG. 3A is a top perspective view of a prismatic battery;
FIG. 3B is a cross-sectional view taken along the line A-A in FIG. 3A;
FIG. 4 is schematically shows a battery module in which batteries are arranged;
FIG. 5 is a plan view showing a schematic configuration of a battery container according to an embodiment of the present disclosure;
FIG. 6 is a front view showing a schematic configuration of the battery container according to an embodiment of the present disclosure;
FIG. 7 is an illustration of a gas tank shown in FIG. 6;
FIG. 8 is a partially exploded perspective view of the gas tank shown in FIG. 7;
FIG. 9 is a cross-sectional view of an upper end portion of the gas tank shown in FIG. 7;
FIGS. 10A and 10B are schematic illustrations describing operation of the gas tank shown in FIG. 9;
FIG. 11 is a partially exploded perspective view of the gas tank shown in FIG. 8 according to another embodiment;
FIG. 12 is a partially exploded perspective view of the gas tank shown in FIG. 8 according to another embodiment;
FIGS. 13A and 13B are schematic illustrations describing operation of the gas tank shown in FIG. 12;
FIG. 14 is a partial cutaway front view of a battery container according to another embodiment of the present disclosure;
FIG. 15 is an illustration of a gas tank shown in FIG. 14;
FIG. 16 is a block diagram describing an opening method of the gas tank of FIG. 15; and
FIG. 17 is a partial cutaway front view of a battery container according to another embodiment of the present disclosure.

### DETAILED DESCRIPTION

Hereinafter, embodiments of the present disclosure will be described, in detail, with reference to the accompanying drawings. The terms or words used in the present specification and claims should not be narrowly interpreted according to their general or dictionary meanings but should be interpreted as having meanings and concepts that are consistent with the technical idea of the present disclosure on the basis of the principle that an inventor can be his/her own lexicographer to appropriately define concepts of terms to describe his/her invention in the best way.

The embodiments described in this specification and the configurations shown in the drawings are only some embodiments of the present disclosure and do not represent all of the aspects, features, and embodiments of the present disclosure. Accordingly, it should be understood that there may be various equivalents and modifications that can replace or modify one or more embodiments or features therein described herein at the time of filing this application.

It will be understood that if an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, if a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" if describing embodiments of the present disclosure relates to "one or more embodiments of the present disclosure." Expressions, such as "at least one of" and "any one of," if preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," if used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein. All such ranges are intended to be inherently described in this specification such that amending to expressly recite any such subranges would comply with the requirements of patent rules.

The valve control unit and/or any other relevant devices or components according to embodiments of the present disclosure described herein may be implemented utilizing any suitable hardware, firmware (e.g., an application-specific integrated circuit), software, and/or a suitable combination of software, firmware, and hardware. For example, the various components of the valve control unit may be formed on one integrated circuit (IC) chip or on separate IC chips. Further, the various components of the valve control unit may be implemented on a flexible printed circuit film, a tape carrier package (TCP), a printed circuit board (PCB), or formed on a same substrate as the valve control unit. Further, the various components of the valve control unit may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, or the like. Also, a person of skill in the art should recognize that the functionality of various computing devices may be combined or integrated into a single computing device or the functionality of a particular computing device may be distributed across one or more other computing devices without departing from the scope of the example embodiments of the present disclosure.

References to two compared elements, features, etc. as being "the same" may mean that they are "substantially the same." Thus, the phrase "substantially the same" may include a case having a deviation that is considered low in the art, for example, a deviation of 5% or less. In addition, if a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may contact the upper (or lower) surface of the element, and another element may also be interposed between the element and the arbitrary element located on (or under) the element.

In addition, it will be understood that if a component is referred to as being "linked," "coupled," or "connected" to another component, the elements may be directly "coupled," "linked" or "connected" to each other, or another component may be "interposed" between the components."

Throughout the specification, if "A and/or B" is stated, it means A, B or A and B, unless otherwise stated. That is, "and/or" includes any or all combinations of a plurality of items enumerated. When "C to D" is stated, it means C or more and D or less, unless otherwise specified.

The terminology used herein is for the purpose of describing embodiments of the present disclosure and is not intended to limit the present disclosure.

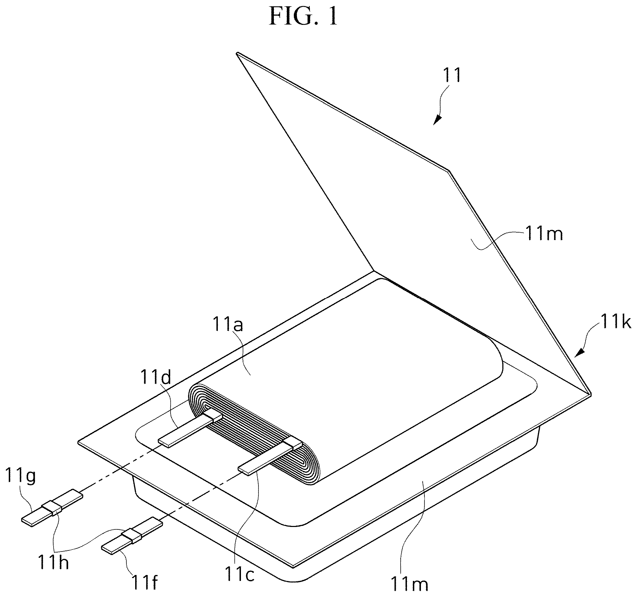

FIG. 1 schematically illustrates a pouch-type secondary battery 11.

The pouch-type secondary battery 11 includes an electrode assembly 11a and a pouch 11k that accommodates the electrode assembly 11a.

In the electrode assembly 11a, a first electrode tab 11c and a second electrode tab 11d may be electrically connected to external first and second terminal leads 11f and 11g, respectively, by welding. Each of the first terminal lead 11f and the second terminal lead 11g may be attached with a tab film 11h for insulation from the pouch 11k.

The pouch 11k may be sealed by having sealing parts 11m at the edges thereof come into contact with each other while accommodating the electrode assembly 11a therein, in which case the sealing may be achieved with the tab film 11h interposed between the sealing parts 11m. The sealing parts 11m of the pouch 11k may each be made of a thermal fusion material that generally exhibits weak adhesion to metal. Thus, the thin tab film 11h may be fused to the pouch 11k by interposing it between the sealing parts 11m.

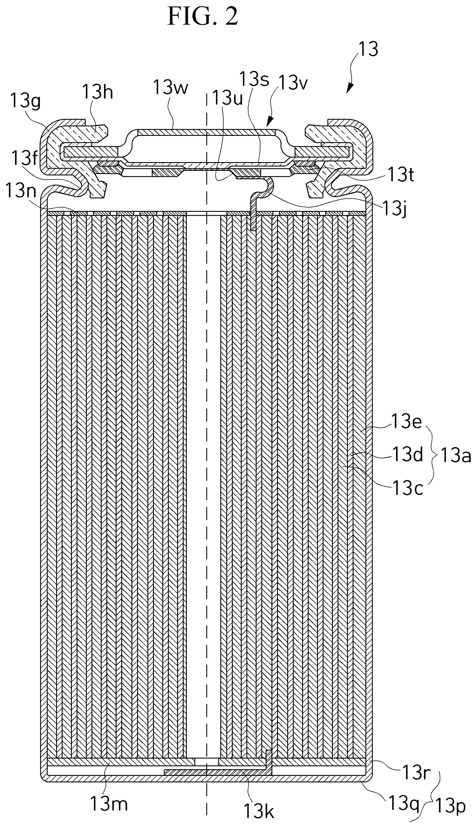

FIG. 2 illustrates a cylindrical secondary battery 13. As shown in FIG. 2, the cylindrical secondary battery 13 may include an electrode assembly 13a, a case 13p accommodating the electrode assembly 13a and an electrolyte therein, a cap assembly 13v coupled to an opening in the case 13p to seal the case 13p, and an insulating plate 13n positioned between the electrode assembly 13a and the cap assembly 13v inside the case 13p.

The electrode assembly 13a may include a separator 13d and a first electrode 13c and a second electrode 13e positioned with the separator 13d interposed therebetween, and the electrode assembly 13a may be wound in a jelly-roll shape.

The first electrode 13c includes a first substrate and a first active material layer on the first substrate. A first lead tab 13j may extend outwardly from a first uncoated portion of the first substrate at where the first active material layer is not located, and the first lead tab 13j may be electrically connected to the cap assembly 13v.

The second electrode 13e includes a second substrate and a second active material layer on the second substrate. A second lead tab 13k may extend outwardly from a second uncoated portion of the second substrate at where the second active material layer is not located, and the second lead tab 13k may be electrically connected to the case 10. The first lead tab 13j and the second lead tab 13k may extend in opposite directions with respect to each other.

The first electrode 13c may act as a positive electrode. In such an embodiment, the first substrate may be made of, for example, an aluminum foil, and the first active material layer may include, for example, a transition metal oxide. The second electrode 13e may act as a negative electrode. In such an embodiment, the second substrate may be made of, for example, a copper foil or a nickel foil, and the second active material layer may include graphite, for example.

The separator 13d prevents a short circuit between the first electrode 13c and the second electrode 13e while allowing movement of lithium ions therebetween. The separator 13d may be made of, for example, a polyethylene film, a polypropylene film, a polyethylene-polypropylene film, or the like.

The case 13p accommodates the electrode assembly 13a and, together with the cap assembly 13v, forms the external appearance of the secondary battery. The case 13p may have a substantially cylindrical body portion 13r and a bottom portion 13q connected to one side (e.g., to one end) of the body portion 13r. A beading part 13f (e.g., a bead) deformed inwardly may be formed in the body portion 13r, and a crimping part 13g (e.g., a crimp) bent inwardly may be formed at an open end of the body portion 13r.

The beading part 13f can reduce or prevent movement of the electrode assembly 13a inside the case 13p and can facilitate seating of the gasket 13h and the cap assembly 13v. The crimping part 13g may firmly fix the cap assembly 13v by pressing the edge of the cap assembly 13v against the gasket 13h. The case 13p may be formed of iron plated with nickel, for example.

The cap assembly 13v may be fixed to the inside of the crimping part 13g by the gasket 13h to seal the case 13p. The cap assembly 13v may include a cap up 13w, a safety vent 13s, a cap down 13t, an insulating member, and a sub plate 13u but is not limited thereto and may be modified in various ways.

The cap up 13w may be positioned at the uppermost part of the cap assembly 13v. The cap up 13w may include a terminal part that protrudes upwardly and is to be connected to an external circuit, and an outlet for discharging gas may be arranged around the terminal part.

The safety vent 13s may be located under the cap up 13w. The safety vent 13s may include a protrusion part that protrudes convexly downwardly and is connected to the sub plate 13u, and at least one notch may be formed in the safety vent 13s around the protrusion part.

When gas is generated due to overcharging or abnormal operation of the secondary battery, the protrusion part is deformed upwardly by the pressure and separates from the sub plate 13u while the safety vent 13s is cut (e.g., bursts or tears) along the notch. The cut safety vent 13s may prevent the secondary battery from exploding by allowing the gas to be discharged to the outside.

The cap down 13t may be below the safety vent 13s. The cap down 13t may have a first opening for exposing the protrusion part of the safety vent 13s and a second opening for gas discharge. The insulating member may be positioned between the safety vent 13s and the cap down 13t to insulate the safety vent 13s and the cap down 13t from each other.

The sub plate 13u may be under the cap down 13t. The sub plate 13u may be fixed to a lower surface of the cap down 13t to block the first opening of the cap down 13t, and the protrusion part of the safety vent 13s may be fixed to the sub plate 13u. The first lead tab 13j, which is drawn out from the electrode assembly 13a, may be fixed to the sub plate 13u. Accordingly, the cap up 13w, the safety vent 13s, the cap down 13t, and the sub plate 13u may be electrically connected to the first electrode 13c of the electrode assembly 13a.

The insulating plate 13n may be positioned to be in contact with the electrode assembly 13a below the beading part 13f. The insulating plate 13n may have a tab opening through which the first lead tab 13j is drawn out. The cap assembly 13v, which is electrically connected to the first electrode 13c by the first lead tab 13j, may face the electrode assembly 13a with the insulating plate 13n interposed therebetween and may maintain a state of being insulated (e.g., electrically insulated) from the electrode assembly 13a by the insulating plate. Another insulating plate 13m may insulate the electrode assembly 13a and the bottom portion 13q of the case 13p from each other.

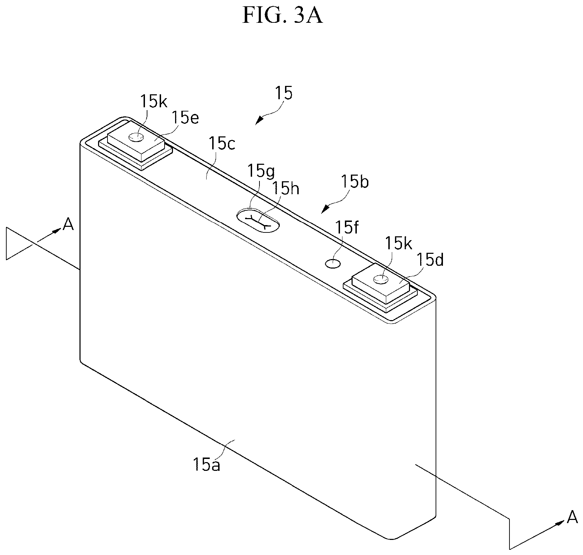

FIG. 3A is a top perspective view of a prismatic battery 15.

The case 15a forms the overall appearance of the prismatic battery 15 and may be formed of a conductive metal, such as aluminum, aluminum alloy, or nickel-plated steel. In addition, the case 15a may provide a space for accommodating an electrode assembly therein.

A cap assembly 15b may include a cap plate 15c that covers the opening in the case 15a. In some embodiments, the case 15a and the cap plate 15c may be made of a conductive material. A first terminal 15d and a second terminal 15e may be electrically connected to respective positive and negative (or negative and positive) electrodes inside the case and may be installed to protrude outwardly through the cap plate 15c.

An electrolyte inlet 15f may be formed in the cap plate 15c. A gas discharge hole (or gas discharge opening) 15g may formed in the cap plate 15c, and a vent (e.g., a degassing device 15h) may be connected to (or installed in) the gas discharge hole 15g. The degassing device 15h is opened by gas generated inside the battery.

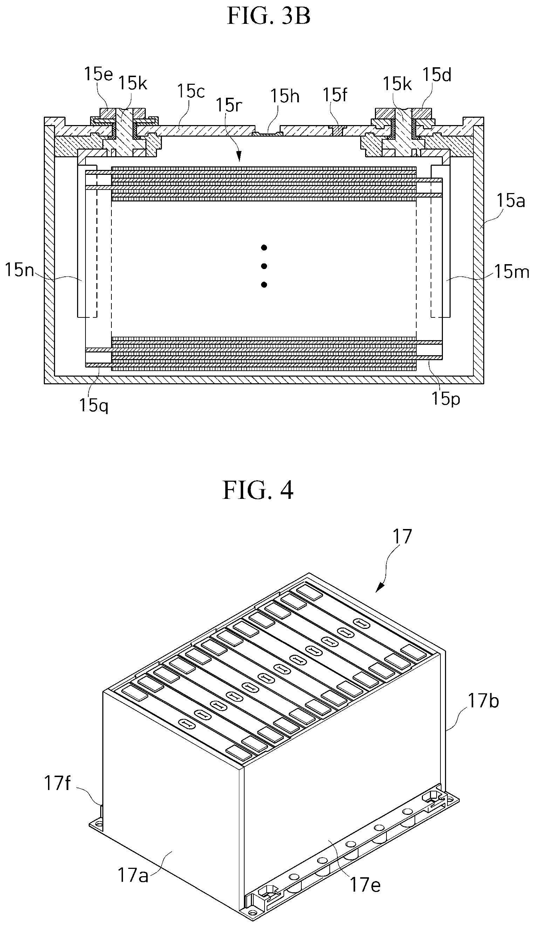

FIG. 3B is a cross-sectional view taken along the line A-A in FIG. 3A. With reference to FIG. 3B, the internal structure of the prismatic secondary battery 15 and the coupling structure with the cap assembly 15b, according to an embodiment, will be further described.

An electrode assembly 15r may be formed by winding or stacking a stack of a first electrode plate, a separator, and a second electrode plate, which are formed as thin plates or films. When the electrode assembly 15r is a wound stack, a winding axis may be parallel to the longitudinal direction of the case 15a. In other embodiments, the electrode assembly 15r is a stack type rather than a winding type. The shape of the electrode assembly 15r is not limited in the present disclosure.

In addition, the electrode assembly 15r may be a Z-stack electrode assembly in which a positive electrode plate and a negative electrode plate are inserted into both sides of a separator, which is then bent (or folded) into a Z-stack. In addition, one or more electrode assemblies 15r may be stacked such that long sides of the electrode assemblies are adjacent to each other and accommodated in the case, and the number of electrode assemblies in the case is not limited in the present disclosure. The first electrode plate of the electrode assembly 15r may act as a negative electrode, and the second electrode plate may act as a positive electrode. Of course, the reverse is also possible.

The first electrode plate may be formed by applying a first electrode active material, such as graphite, carbon, or the like, to a first electrode current collector formed of a metal foil, such as copper, a copper alloy, nickel, a nickel alloy, or the like. The first electrode plate may include a first electrode tab 15p (e.g., a first uncoated portion) that is a region to which the first electrode active material is not applied. The first electrode tab 15p may act as a current flow path between the first electrode plate and the first current collector 15m. In some embodiments, when the first electrode plate is manufactured, the first electrode tab 15p is formed by being cut in advance to protrude to one side of the electrode assembly, or the first electrode tab protrudes to one side of the electrode assembly more than (e.g., farther than or beyond) the separator without being separately cut.

The second electrode plate may be formed by applying a second electrode active material, such as a transition metal oxide, on a second electrode current collector formed of a metal foil, such as aluminum or an aluminum alloy. The second electrode plate may include a second electrode tab 15q (e.g., a second uncoated portion) that is a region to which the second electrode active material is not applied. The second electrode tab 15q may act as a current flow path between the second electrode plate and the second current collector 15n. In some embodiments, the second electrode tab 15q may be formed by being cut in advance to protrude to the other side (e.g., the opposite side) of the electrode assembly when the second electrode plate is manufactured, or the second electrode plate may protrude to the other side of the electrode assembly more than (e.g., farther than or beyond) the separator without being separately cut.

The separator prevents a short circuit between the first electrode and the second electrode while allowing movement of lithium ions therebetween. The separator may be made of, for example, a polyethylene film, a polypropylene film, a polyethylene-polypropylene film, or the like.

In some embodiments, an electrode assembly 15r is accommodated in the case 15a along with an electrolyte.

The first current collector 15m and the second current collector 15n may be welded and connected to the first electrode tab 15p extending from the first electrode plate and the second electrode tab 15q extending from the second electrode plate, respectively.

As illustrated in FIG. 3B, the first current collector 15m and the second current collector 15n are connected to the first terminal 15d and the second terminal 15e through connection members 15k, respectively. In some embodiments, the connection members 15k may each have an outer peripheral surface that is threaded and may be fastened to the first terminal 15d and the second terminal 15e by screwing. However, the present disclosure is not limited thereto. For example, the connection members 15k may also be coupled to the first terminal 15d and the second terminal 15e by riveting or welding.

FIG. 4 is a perspective view of a secondary battery module in which secondary batteries according to embodiments of the present disclosure are arranged. With the increase in secondary battery capacity for driving electric vehicles, ESS (energy storage system), or the like, a secondary battery module may be manufactured by arranging a plurality of secondary battery cells together transversely and/or longitudinally and connecting them together. The plurality of secondary batteries may be arranged in a space defined by a pair of facing end plates 17a and 17b and a pair of facing side plates 17e and 17f. The secondary batteries may be arranged (or connected) in an arrangement (direction or configuration) and number to obtain desired voltage and current specifications.

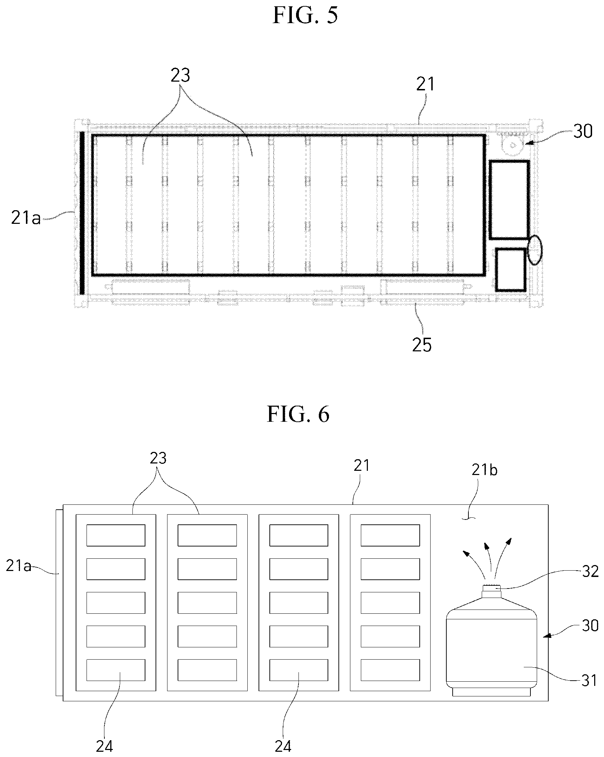

FIGS. 5 and 6 are schematic views of an ESS including batteries in a container 21 according to an embodiment of the present embodiment.

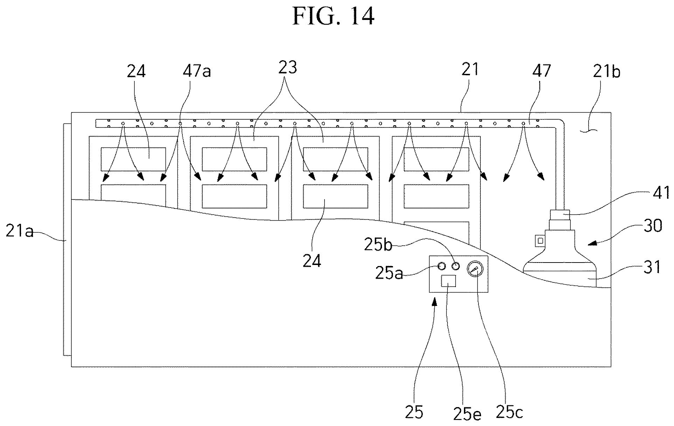

Referring to FIGS. 5 and 6, a plurality of racks 23 are disposed in an internal space 21b of the container 21. A plurality of battery modules 24 are mounted on the racks 23 (e.g., on each of the racks 23) to have a designed voltage and current capacity. In addition, a battery control unit (BCU), a battery control panel (BCP), a battery management system (BMS), and/or any auxiliary equipment may be installed at one side of the container 21. For example, a valve control unit 25 (see, e.g., FIG. 14) may be mounted therein. The valve control unit 25 will be described in more detail below.

In addition, a gas tank 30 may be installed inside the container 21. The gas tank 30 may be a pressure drop responsive gas tank according to the present embodiment. The gas tank 30 may be filled with non-combustible gas. The non-combustible gas may include nitrogen or carbon dioxide. The size, installation position, and number of gas tanks 30 may vary.

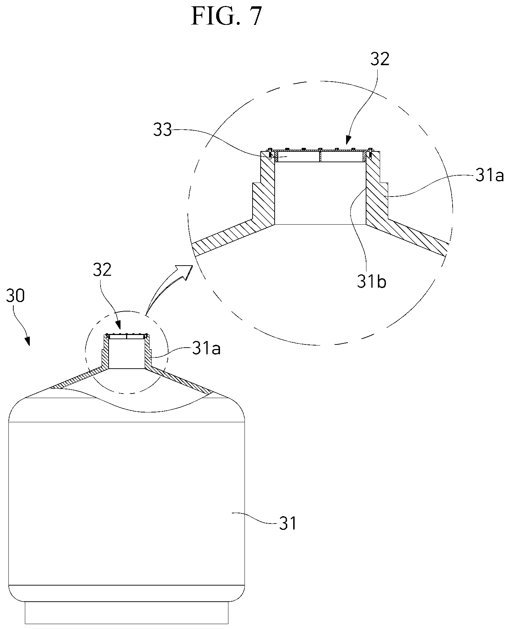

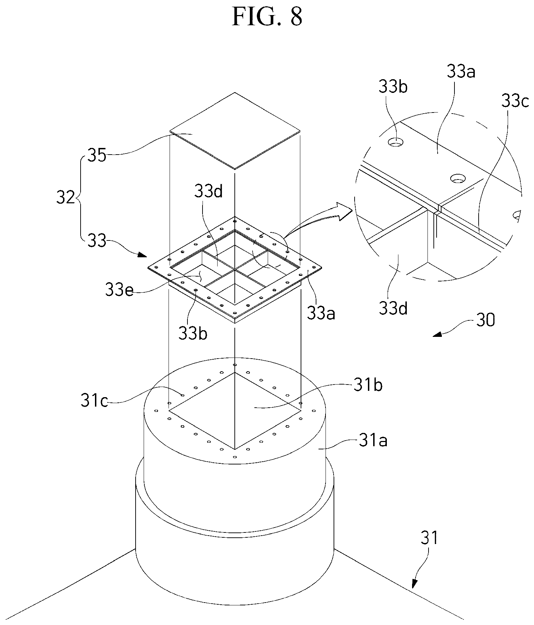

The gas tank 30 may have a configuration as shown in FIGS. 7 and 8.

FIG. 7 is a view of the gas tank 30 shown in FIG. 6, and FIG. 8 is a partially exploded perspective view of the gas tank 30 shown in FIG. 7.

The gas tank 30 may include a tank main body 31 and an opening device 32 (e.g., an opening valve). The tank main body 31 is a pressure-resistant container filled with (or configured to receive) the non-combustible gas. A gas filling pressure inside the tank main body 31 may vary.

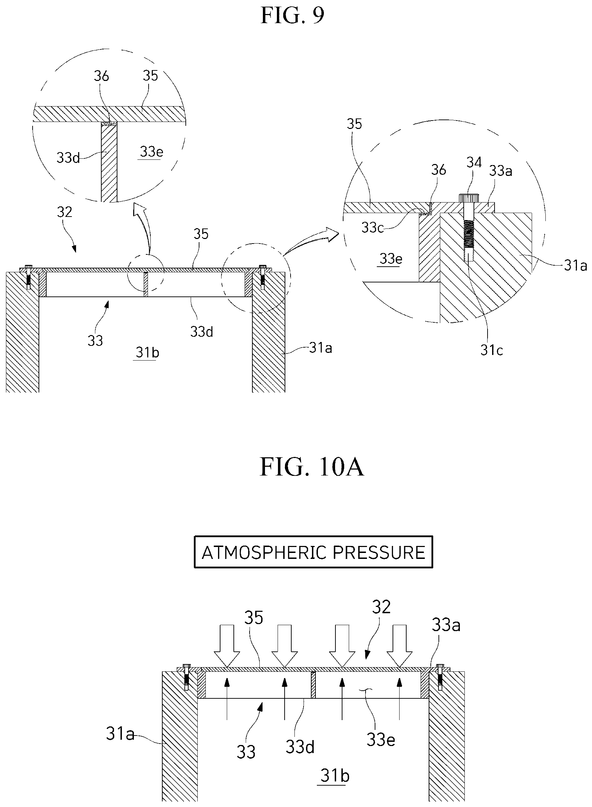

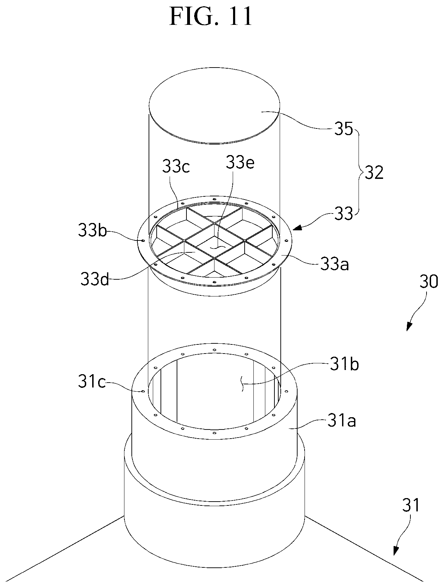

A discharge passage 31b may be provided at an upper end portion 31a of the tank main body 31. The discharge passage 31b is an outlet of the tank main body 31 through which the non-combustible gas is discharged externally. The discharge passage 31b shown in FIG. 8 may have a quadrangular shape. However, in other embodiments, the discharge passage 31b may be circular or polygonal as shown in, for example, FIG. 11. In addition, a plurality of female screw holes (e.g., threaded holes) 31c may be formed near (e.g., around a periphery of) the discharge passage 31b. The female screw hole 31c is a hole to which a bolt 34 (see, e.g., FIG. 9) that fixes a fixed supporter 33 to the discharge passage 31b at the upper end portion 31a of the tank main body 31 may be coupled.

The opening device 32 is an assembly mounted on the discharge passage 31b. The opening device 32 may open the discharge passage 31b when an internal pressure of the container 21 is lower than the atmospheric pressure, thereby allowing the non-combustible gas to be discharged outside the tank main body 31. The non-combustible gas discharged from the tank main body 31 fills the container 21 and prevents (or corrects) a drop in pressure in the container 21. The drop in pressure is prevented (or corrected) to prevent the back draft phenomenon, thereby enabling safer and quicker extinguishment of a fire in the container 21.

In the case of a fire inside the sealed container 21, oxygen in the internal space 21b is exhausted, and thus, the internal pressure in the container 21 becomes lower than the atmospheric pressure. At this time, the interior of the container 21 lacks oxygen and, thus, is in a smoldering state. When a door 21a of the container 21 is opened while it is in the smoldering state, the back draft phenomenon in which oxygen suddenly flows into the container occurs, and combustion gas is instantaneously ignited.

The pressure drop responsive gas tank 30 according to embodiments of the present embodiment mitigates or prevents the above-described back draft phenomenon.

The opening device 32 may include the fixed supporter 33 and a rupture plate 35.

The fixed supporter 33 may be fixed to an upper end surface of the tank main body 31 and is configured to be opened (e.g., to burst or rupture) when the internal pressure of the container 21 is lower than the atmospheric pressure. The fixed supporter 33 may include a frame 33a and a plate support 33d.

The frame 33a may have a quadrangular frame shape and may be fixed to the upper end surface of the tank main body 31 by a plurality of bolts. The frame 33a may be separated from the tank main body 31 by removing the bolts. The rupture plate 35 may be disposable, but the fixed supporter 33 may be replaceably (or repeatably) used. An internal area of the frame 33a is a gas passage 33e through which non-combustible gas passes. In addition, a support step 33c may be provided at an inner end portion (e.g., along an inner edge) of the frame 33a. The support step 33c is a groove into which an edge of the rupture plate 35 is inserted. Reference numeral 33b indicates a bolt hole.

In the illustrated embodiment, the plate support 33d is a cross-shaped structure fixed to the inside of the frame 33a. The plate support 33d may support the rupture plate 35. The plate support 33d prevents the rupture plate 35 from being pushed down into (or displaced into) the tank main body 31 even when the internal pressure of the container 21 instantaneously increases due to an explosion of a battery or the like.

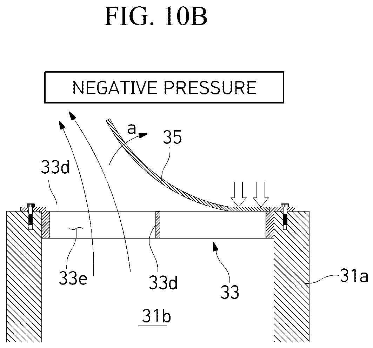

The rupture plate 35 may be a plate-shaped member that blocks the gas passage 33e while being mounted on the fixed supporter 33. The rupture plate 35 may be deformed due to an expansion pressure of the non-combustible gas when the internal pressure of the container 21 is a negative pressure state (e.g., a pressure lower than atmospheric pressure) and may open the gas passage. For example, as shown in FIG. 10B, the rupture plate 35 may burst in a direction of arrow a.

The rupture plate 35 may be a metal sheet having a thickness (e.g., a predetermined thickness) of less than about 0.1 mm. For example, in one embodiment, the rupture plate 35 may have a thickness of about 0.08 mm. The rupture plate 35 may be formed of aluminum.

FIG. 9 is a cross-sectional view of the upper end portion of the gas tank 30 shown in FIG. 7, and FIGS. 10A and 10B are views illustrating operation of the gas tank shown in FIG. 9.

Referring to FIG. 9, the rupture plate 35 is supported by the fixed supporter 33. The edge of the rupture plate 35 may be inserted into (e.g., may rest on) the support step 33c. In addition, a bottom surface of the rupture plate 35 may be supported by the plate support 33d.

In addition, a fixing holder 36 may be provided between the rupture plate 35 and the fixed supporter 33. The fixing holder 36 may ensure that the rupture plate 35 remains coupled to the fixed supporter 33. The fixing holder 36 may be an adhesive. Adhesive strength of the adhesive may be relatively greater than a filling pressure of the non-combustible gas filled in the gas tank 30.

FIG. 10A shows the opening device 32 when the internal pressure of the container 21 is equal to or higher than the atmospheric pressure. Referring to FIG. 10A, the rupture plate 35 blocks the gas passage 33e while maintaining a horizontal orientation.

A force acting on the rupture plate 35 sufficient to block the gas passage may be a sum of the internal pressure of the container 21, that is, a force pressing the rupture plate 35 from below (e.g., a vertical pressing force) and an adhesive strength of the fixing holder 36. This "combined force" that includes the vertical pressing force and the adhesive strength may be higher than or equal to the internal gas pressure of the tank main body 31.

However, when the equilibrium state of the force is maintained and, subsequently, the internal pressure of the container 21 becomes lower than the atmospheric pressure, the "combined force" becomes lower than the internal pressure of the tank main body 31, and at that moment, the opening device 32 may burst, thereby opening the gas passage 33e. For example, the rupture plate 35 may open in the direction of the arrow a shown in FIG. 10B. When the gas passage 33e opens, the non-combustible gas inside the tank main body 31 may be discharged into and may fill the container 21. The drop in pressure of the container 21 is mitigated or entirely eliminated due to the non-combustible gas exhausted from the tank main body 31, and even when the door 21a is opened, the back draft phenomenon does not occur.

FIG. 11 is a partially exploded perspective view of a gas tank 30 according to another embodiment.

Hereinafter, the same reference numerals as the aforementioned reference numerals denote the same members having the same configurations and/or functions unless specifically described otherwise.

As shown in FIG. 11, when the discharge passage 31b of the tank main body 31 is circular, a circular opening device 32 may be applied thereto. The opening device 32 shown in FIG. 11 has a circular fixed supporter 33 and rupture plate 35.

The fixed supporter 33 has a ring-shaped frame 33a and plate supporter 33d. The rupture plate 35 may have a disk shape having a thickness and a peripheral portion fixedly accommodated in the support step 33c of the frame. The rupture plate 35 may be fixed to the fixed supporter 33 by the fixing holder. The fixing holder may be an adhesive.

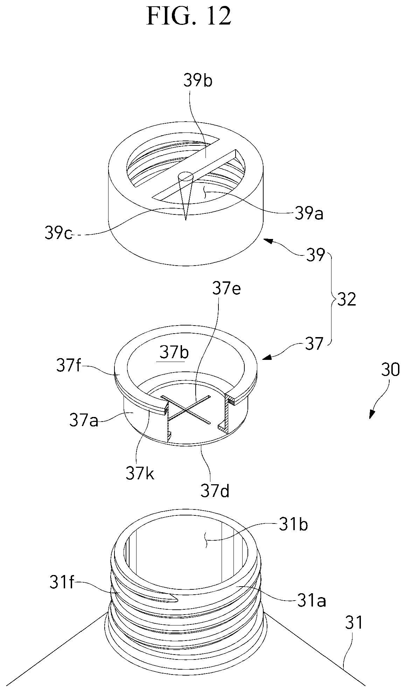

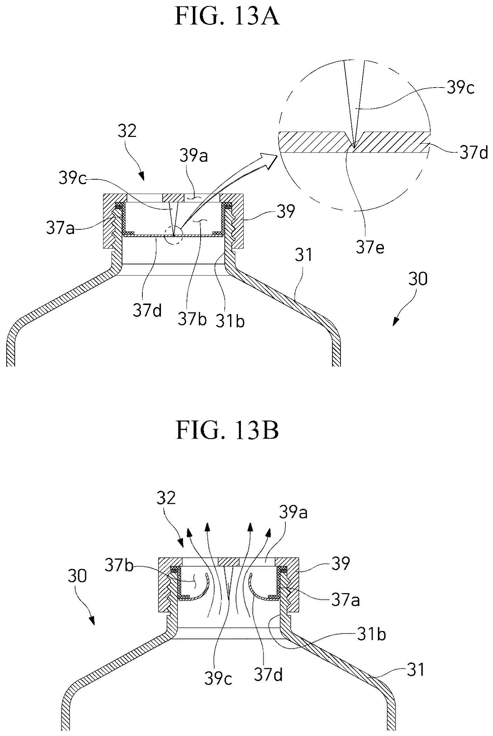

FIG. 12 is a partially exploded perspective view describing a gas tank 30 according to another embodiment of the present disclosure, and FIGS. 13A and 13B describe operation of the gas tank 30 shown in FIG. 12.

As shown in FIG. 12, the opening device 32 may include an inner cap 37 and an outer cap 39.

The inner cap 37 may include a cap body 37a and a rupture plate 37d. The cap body 37a may have a cylindrical shape with a diameter (e.g., a predetermined diameter) and a stopper 37f at an upper end portion thereof. The stopper 37f may be caught on (e.g., may be supported by) the upper end portion of the tank main body 31 when the cap body 37a is inserted into the discharge passage 31b. The stopper 37f may be formed to prevent the inner cap 37 from falling in to the tank main body 31. In addition, a seal 37k may be provided at the bottom of the stopper 37f.

The seal 37k prevents the non-combustible gas from leaking. An outer circumferential surface of the inner cap 37 may come into close contact with an inner circumferential surface of the discharge passage 31b. In addition, the inner cap 37 may provide a gas passage 37b. The gas passage 37b is an internal space of the inner cap 37 and may provide a discharge path for non-combustible gas.

The rupture plate 37d may be fixed to a lower end portion of the cap body 37a. The rupture plate 37d may be fixed to the cap body 37a by adhesion or welding. The rupture plate 37d may have a disc shape with a diameter similar to the rupture plate 35 as shown in, for example, FIG. 11. A material or thickness of the rupture plate 35 may be the same as that of the aforementioned rupture plate 35. The rupture plate 37d may block the gas passage 37b of the cap body 37a.

In addition, a notch 37e may be formed in an upper surface of the rupture plate 37d. The notch 37e may be a cutting line (or groove) in the rupture plate 37d. The rupture plate 37d may be cut along (e.g., may burst along) the notch 37e.

The outer cap 39 is coupled to a coupling screw 31f at the top of the tank main body 31 by screwing and is detachably attached to the tank main body 31. The outer cap 39 may be replaceably used. A female screw member (e.g., a threaded hole) may be formed in an inner circumferential surface of the outer cap 39. When the inner cap 37 is first fitted into the discharge passage 31b and the outer cap 39 is fixed thereto, the inner cap 37 may be coupled to the tank main body 31.

The outer cap 39 may have a vertically open penetration path 39a. The penetration path 39a is a passage through which the non-combustible gas passes. In addition, a support 39b may be provided at a central portion of the outer cap 39.

A rupture trigger member 39c is fixed to the support 39b. The rupture trigger member 39c may be a substantially conical member having a lower end portion that is machined to be pointed as shown in FIG. 13A. The lower end portion of the rupture trigger member 39c may come into point contact with a central portion of the upper surface of the rupture plate 37d. The lower end portion of the rupture trigger member 39c may be positioned at a center point of the notch 37e.

The rupture trigger member 39c may cut the notch 37e when the rupture plate 37d swells. The rupture plate 37d may swell when the internal pressure of the container 21 is lower than the atmospheric pressure.

As shown in FIG. 13B, the cut rupture plate 37d may be bent upwardly by the expansion pressure of the non-combustible gas. When the rupture plate 37d ruptures, the gas passage 37b is opened and the non-combustible gas is discharged, thereby increasing the internal pressure of the container 21.

FIG. 13A shows a state in which the internal pressure of the container 21 is higher than the atmospheric pressure. The internal pressure of the container and the fixing strength of the cap body 37a and the rupture plate 37d may be in equilibrium with the pressure of the non-combustible gas inside the tank main body 31.

When the internal pressure of the container decreases, the equilibrium state is lost, and the rupture plate 37d may swell. When the rupture plate 37d swells, the rupture trigger member 39c bursts the rupture plate 37d, and the non-combustible gas is discharged.

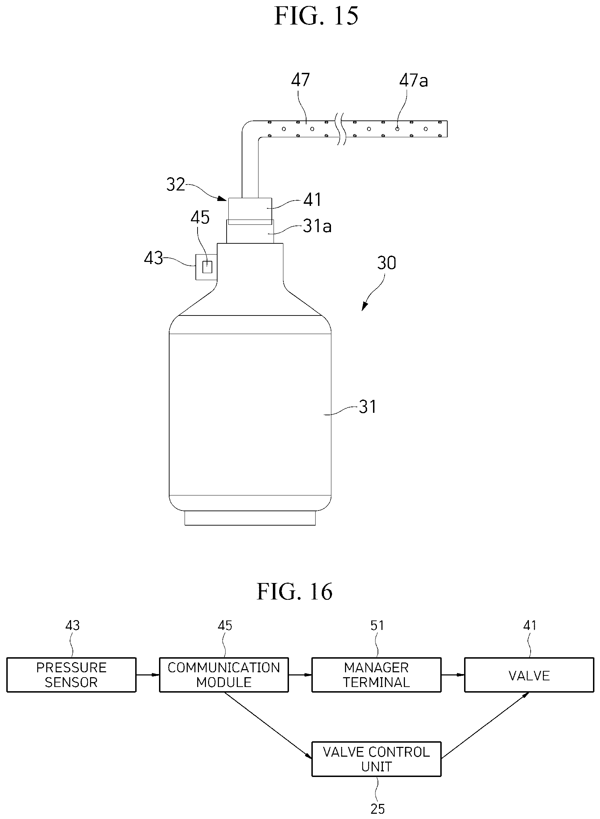

FIG. 14 illustrates a battery container 21 according to another embodiment of the present disclosure, FIG. 15 is a view of a gas tank 30 shown in FIG. 14, and FIG. 16 is a block diagram describing the opening method of the gas tank 30 shown in FIG. 15.

Referring to FIG. 14, the battery container 21 may include the gas tank 30, a valve 41, a guide pipe 47, a valve control unit (e.g., a valve controller) 25, a pressure sensor 43, a communication module 45, and a manager terminal 51.

The container 21 may accommodate a plurality of racks 23 and the gas tank 30. The door 21a may be installed at one side of the container 21.

The gas tank 30 is a pressure-resistant container that accommodates non-combustible gas. The gas tank 30 may have the tank main body 31 and the valve 41. The valve 41 is mounted on the discharge passage 31b of the tank main body 31 and opens the discharge passage when the internal pressure of the container is lower than the atmospheric pressure to discharge the non-combustible gas outside the tank main body 31. The valve 41 may be controlled through the valve control unit 25 or the manager terminal 51. The valve 41 may be a solenoid-type valve configured to be remotely controlled.

The guide pipe 47 is a pipe connected to an outlet of the valve 41 and may extend in the longitudinal direction. In the illustrated embodiment, the guide pipe 47 may extend toward the door 21a by extending vertically from the gas tank 30 and then being bent. A plurality of discharge holes (or discharge openings) 47a may be formed in the guide pipe 47.

The guide pipe 47 is a pipe that guides the non-combustible gas passing through the valve 41. The non-combustible gas discharged through the valve 41 may pass through the inside of the guide pipe 47 and may be discharged through the discharge holes 47a. The guide pipe 47 increases the movement speed of the non-combustible gas.

The pressure sensor 43 is configured to detect the internal pressure of the container 21. Pressure information detected by the pressure sensor 43 may be transmitted to the manager terminal 51 or the valve control unit 25 through the communication module 45.

The manager terminal 51 may be a smartphone, a tablet PC, or a computer of a manager (or user) who manages the container. Internal pressure data of the container 21 may be transmitted to the manager terminal 51 in real time.

When the internal pressure of the container 21 is lower than the atmospheric pressure, the manager may open the valve 41 through the manager terminal 51. When the valve 41 is opened, non-combustible gas is supplied to the container internal space 21b, pressure in the container internal space 21b increases, and (when the cause of the pressure drop is a fire occurrence situation) the back draft phenomenon does not occur.

The valve control unit 25 may control the valve 41 and may be installed on an outer wall of the container 21. The valve control unit 25 may be connected to the communication module 45 and may have a box shape.

As shown in FIG. 14, two lamps (e.g., two lights) 25a and 25b, a valve switch 25e, and a pressure gauge 25c may be disposed in the valve control unit 25.

From among the two lamps 25a and 25b, one lamp 25a is turned on when the internal pressure of the container is higher than the atmospheric pressure and may output (or emit) green light. The lamp 25b next the lamp 25a is turned on when the internal pressure of the container is lower than the atmospheric pressure and may output (or emit) red light.

The valve switch 25e is a switch for operating the valve 41. The valve 41 may be driven or stopped by the valve switch 25e.

The pressure gauge 25c displays the internal pressure of the container received from the communication module 45. The pressure gauge 25c may be an analog or digital gauge.

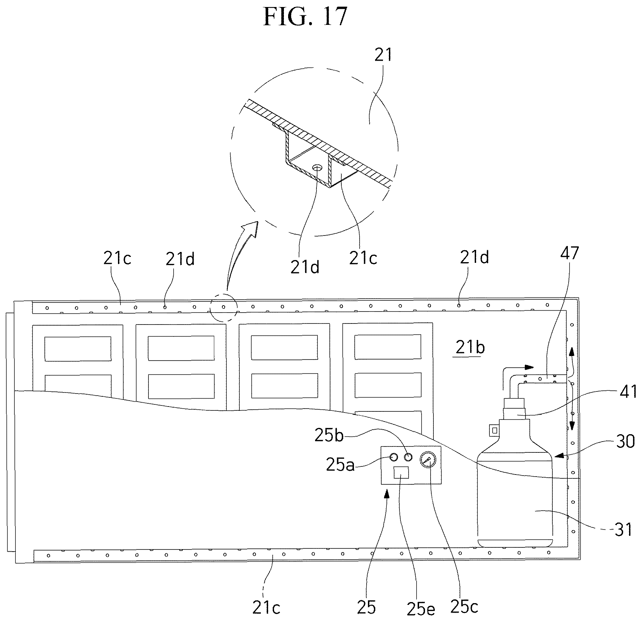

FIG. 17 is an illustration of a battery container 21 according to another embodiment of the present disclosure.

Referring to FIG. 17, a fixed duct 21c may be fixed to the inner surface (e.g., a wall surface, ceiling surface, and floor surface) of the container 21. The fixed duct 21c may be immovably fixed to the inside of the container 21. A plurality of discharge holes (or discharge openings) 21d may be formed in the fixed duct 21c.

The valve 41 and the fixed duct 21c may be connected to each other by the guide pipe 47. Therefore, the non-combustible gas passing through the valve 41 may flow into the fixed duct 21c through the guide pipe 47 and may then be discharged through the discharge holes 21d while moving along the fixed duct 21c. The non-combustible gas discharged through the discharge holes increases the internal pressure of the container 21 when it is in a negative pressure state.

The gas tank opening device according to an embodiment of the present embodiment is a device for opening (or configured to open) the discharge passage of the tank main body 31 when the internal pressure of the container 21 decreases. As described above, the non-combustible gas is discharged when the discharge passage is opened so that the internal pressure of the container may be restored to atmospheric pressure or higher.

The gas tank opening device according to an embodiment of the present embodiment may be mounted on the tank main body 31 and may open the discharge passage when the internal pressure of the container 21 decreases to have a passage opening part that discharges the non-combustible gas from the tank main body. The passage opening part may be the rupture plate 35 and the fixed supporter 33 described with reference FIGS. 8 and 11. As described above, the rupture plate 35 may be ruptured by the expansion pressure of the non-combustible gas inside the tank main body when the internal pressure in the container 21 decreases, thereby opening the discharge passage. In addition, the fixed supporter 33 may be a support member that supports the rupture plate 35 and has the gas passage 33e.

The passage opening part described with reference to FIG. 12 may have the rupture plate 37d, the inner cap 37, the outer cap 39, and the rupture trigger member 39c. The inner cap 37 may be coupled to the rupture plate 37d and may block the gas passage by the rupture plate 37d. The inner cap 37 may be installed in the discharge passage. In addition, the outer cap 39 maintains the fixed state of the inner cap 37 while being coupled to the tank main body 31. The penetration path 39a may be formed in the outer cap 39. The rupture trigger member 39c may be fixed to the outer cap 39.

The passage opening part described with reference to FIG. 15 may include the valve 41. The valve 41 may be controlled by the manager terminal 51 and/or the valve control unit 25. In addition, the manager terminal 51 and the valve control unit 25 may control the valve 41 based on the container internal pressure data received through the communication module 45.

A pressure drop responsive gas tank according to embodiments of the present disclosure mitigates or prevents a drop in internal pressure of a container by being automatically operated in the case of a fire inside the container accommodating a battery, thereby reducing or eliminating the risk of a back draft and enabling early extinguishment of the fire.

According to embodiments of the present disclosure, the battery container has a built-in pressure responsive gas tank that mitigates or prevents a drop in internal pressure by being automatically operated in the case of a fire inside the container, thereby reducing or preventing the occurrence of a back draft even when a door is opened.

Although the present disclosure has been described above with respect to embodiments thereof, the present disclosure is not limited thereto. Various modifications and variations can be made thereto by those skilled in the art within the scope of the present disclosure as defined by the appended claims and their equivalents.

## Claims

1. A pressure drop responsive gas tank comprising:
a tank main body configured to be installed inside a container,
wherein the tank main body accommodates a non-combustible gas, and has a discharge passage configured to discharge the non-combustible gas; and
an opening device mounted on the discharge passage and configured to open the discharge passage when an internal pressure of the container is lower than an atmospheric pressure so that the non-combustible gas is discharged from the tank main body.

2. The pressure drop responsive gas tank as claimed in claim 1, wherein the opening device comprises:
a fixed supporter on the discharge passage and forming a gas passage therethrough; and
a rupture plate blocking the gas passage while mounted on the fixed supporter and configured to be deformed by an expansion pressure of the non-combustible gas when the internal pressure of the container is lower than the atmospheric pressure so that the gas passage is opened.

3. The pressure drop responsive gas tank as claimed in claim 2, wherein the rupture plate is a metal sheet.

4. The pressure drop responsive gas tank as claimed in claim 1, wherein the opening device comprises:
an inner cap having a cap body having a gas passage and mounted inside the discharge passage and a rupture plate fixed to the cap body and blocking the gas passage; and
an outer cap fixing the inner cap while coupled to the tank main body and having a penetration path therethrough.

5. The pressure drop responsive gas tank as claimed in claim **4,** wherein the outer cap further comprises a rupture trigger member having a lower end portion positioned above the rupture plate and configured to rupture the rupture plate when the rupture plate swells upwardly.

6. The pressure drop responsive gas tank as claimed in claim 1, wherein the opening device comprises:
a valve mounted on the discharge passage of the tank main body and controlled to be opened and closed by a control signal transmitted from the outside;
a pressure sensor configured to detect the internal pressure of the container; and
a valve controller connected to the pressure sensor through a communication module and configured to drive the valve based on the detected pressure information.

7. A gas tank opening device configured for mounting on a tank main body, wherein the tank main body accommodates a non-combustible gas, provides a discharge passage of the non-combustible gas, and is configured to be installed inside a container,
wherein the gas tank opening device has a passage opening part configured to open the discharge passage when an internal pressure of the container decreases, so that the non-combustible gas is discharged from the tank main body.

8. The gas tank opening device as claimed in claim 7, wherein the passage opening part further comprises:
a rupture plate configured to be ruptured by an expansion pressure of the non-combustible gas inside the tank main body when the internal pressure of the container decreases to open the discharge passage; and
a fixed supporter having a gas passage and supporting the rupture plate.

9. The gas tank opening device as claimed in claim 7, further comprising:
a rupture plate configured to be ruptured by an expansion pressure of the non-combustible gas inside the tank main body when the internal pressure of the container decreases to open the discharge passage;
an inner cap coupled to the rupture plate, having a gas passage that is blocked by the rupture plate, and installed in the discharge passage; and
an outer cap fixing the inner cap while coupled to the tank main body and having a penetration path therethrough.

10. The gas tank opening device as claimed in claim 9, wherein the outer cap further comprises a rupture trigger member having a lower end portion positioned above the rupture plate and configured to rupture the rupture plate when the rupture plate swells upwardly.

11. A battery container comprising:
a container accommodating a battery and having a door at one side thereof;
a tank main body installed inside the container, wherein the tank main body accommodates a non-combustible gas, and has a discharge passage configured to discharge the non-combustible gas from inside the tank main body into the container; and
an opening device mounted on the discharge passage and configured to open the discharge passage when an internal pressure of the container is lower than an atmospheric pressure so that the non-combustible gas is discharged from inside the tank main body into the container.

12. The battery container as claimed in claim 11, wherein the opening device comprises:
a fixed supporter installed on the discharge passage and having a gas passage therethrough; and
a rupture plate blocking the gas passage while mounted on the fixed supporter and configured to be deformed by an expansion pressure of the non-combustible gas when the internal pressure of the container is a negative pressure so that the gas passage is opened.

13. The battery container as claimed in claim 11, wherein the opening device comprises:
an inner cap having a cap body having a gas passage and mounted inside the discharge passage and a rupture plate fixed to the cap body and blocking the gas passage therethrough; and
an outer cap fixing the inner cap while coupled to the tank main body and having a penetration path therethrough.

14. The battery container as claimed in claim 11, wherein the opening device comprises:
a valve mounted on the discharge passage of the tank main body and controlled to be opened and closed by a control signal transmitted from the outside;
a pressure sensor configured to detect the internal pressure of the container; and
a valve controller connected to the pressure sensor through a communication module and configured to drive the valve based on the detected pressure information.

15. The battery container as claimed in any one of claims 11 to 14, wherein a fixed duct for receiving and guiding the non-combustible gas discharged through the valve and having a plurality of discharge holes is mounted on an inner surface of the container.
